# EUROPÄISCHE PATENTSCHRIFT

(11) **EP 4 260 681 B1**
(45) Veröffentlichungstag und Bekanntmachung des Hinweises auf die Patenterteilung: **14.01.2026**
(21) Anmeldenummer: 23155801.6
(22) Anmeldetag: 09.02.2023
(51) Int. Cl.: A01F 15/14

(54) **KNOTEREINRICHTUNG FÜR EINE LANDWIRTSCHAFTLICHE QUADERBALLENPRESSE**
KNOTTER DEVICE FOR AN AGRICULTURAL SQUARE BALER
DISPOSITIF NOUEUR POUR PRESSE À BALLES CARRÉES AGRICOLE

(30) Priorität: 13.04.2022 DE 102022109000
(43) Veröffentlichungstag der Anmeldung: 18.10.2023
(73) Patentinhaber: Usines CLAAS France S.A.S, 57140 St. Rémy / Woippy (FR)
(72) Erfinder: Altmayer, Marc, 57320 Alzing (FR); Saidia, Abdelkader, 57420 Solgne (FR)
(74) Vertreter: CLAAS Gruppe

(56) Entgegenhaltungen:
- EP-A1- 3 949 719
- CLAAS: "Begeisterung f�r Besseres. Der Knoter. // 100 Jahre CLAAS // 100.claas.com", 11 February 2013 (2013-02-11), XP093072582, Retrieved from the Internet <URL:https://www.youtube.com/watch?v=df-ONLcUavg> [retrieved on 20230810]

## Beschreibung

Die vorliegende Anmeldung betrifft eine Knotereinrichtung für eine landwirtschaftliche Quaderballenpresse gemäß dem Oberbegriff von Anspruch 1. Ferner betrifft die vorliegende Anmeldung ein Verfahren zum Betrieb einer solchen Knotereinrichtung gemäß dem Oberbegriff von Anspruch 5.

Die Knotereinrichtung dient dazu, zwei Abschnitte eines Garns zu einem Knoten zu verknoten. Eine Quaderballenpresse umfasst typischerweise eine Mehrzahl solcher Knotereinrichtungen, die über eine Breite eines Presskanals der Quaderballenpresse verteilt angeordnet sind. Jede Knotereinrichtung ist dazu vorgesehen, zwei Abschnitte eines Garns, das um einen mittels der Quaderballenpresse gebildeten Quaderballen gelegt ist und auf einer Vorratsrolle vorgehalten wird, miteinander zu verknoten, sodass sich aus dem Garn eine Endlosschlaufe bildet, die um den Quaderballen gelegt ist. Mittels solcher Garne wird der jeweils gebildete Quaderballen zusammengehalten.

Zur Bildung eines jeweiligen Knotens umfasst die Knotereinrichtung einen Knoter, der wiederum eine Knoterwelle, einen Knoterhaken mit einer schwenkbeweglichen Zunge sowie ein Zahnrad umfasst. Ferner umfasst die Knotereinrichtung eine Halteeinrichtung, mittels der das Garn während eines Knotenbildungsvorgangs gehalten werden kann. Insbesondere ist die Halteeinrichtung dazu eingerichtet, die beiden Abschnitte des Garns so lange zu halten, bis mittels des Knoters die notwendigen Vorbereitungen zur endgültigen Bildung eines jeweiligen Knotens getroffen sind. Der Knoten wird sodann typischerweise mittels Ziehens an dem Garn fertiggestellt, wobei gleichzeitig das Garn von dem Knoter freigegeben wird.

Die Halteeinrichtung umfasst eine Halterwelle, ein Halteelement, ein Schneidelement sowie ein Zahnrad. Das Halteelement kann insbesondere von einem Klemmrad gebildet sein, mittels dessen das Garn in klemmender Weise gehalten werden kann. Hierbei wird das Garn zwischen zwei Klemmelementen des Halteelements verklemmt. Mittels des Schneidelements wird das Garn bei der Bildung jedes Knotens durchgeschnitten, sodass die mittels des Knotens gebildete Endlosschlaufe vereinzelt, das heißt von der Vorratsrolle des Garns getrennt wird.

Die Zahnräder des Knoters und der Halteeinrichtung, die typischerweise als Kegelräder ausgebildet sind, sind dazu eingerichtet, mit einer Antriebsscheibe der Knotereinrichtung zusammenzuwirken, die um eine Drehachse drehantreibbar ist. Die Antriebsscheibe weist zwei separate Zahnabschnitte auf, die sich jeweils in einem Teilwinkelbereich auf verschiedenen Radien um die Drehachse der Antriebsscheibe erstrecken. Die beiden Zahnabschnitte kämmen mit den Zahnrädern des Knoters und der Halteeinrichtung, wobei ein erster Zahnabschnitt mit dem Zahnrad des Knoters und ein zweiter Zahnabschnitt mit dem Zahnrad der Halteeinrichtung zusammenwirken. Diese Ausgestaltung führt dazu, dass im Zuge einer fortwährenden Drehbewegung der Antriebsscheibe während eines Betriebs der Knotereinrichtung sowohl der Knoter als auch die Halteeinrichtung zyklisch drehangetrieben werden, wenn ihre Zahnräder im Zuge einer jeweiligen Umdrehung der Antriebsscheibe mit den zugeordneten Zahnabschnitt kämmen. Auf diese Weise korrespondiert jede volle Umdrehung der Antriebsscheibe um ihre Drehachse mit einem vollen Drehzyklus sowohl des Knoters als auch der Halteeinrichtung. Ein voller Drehzyklus korrespondiert typischerweise mit einer Drehung des Knoterhakens um 360° um eine Längsachse der Knoterwelle und des Halteelements um 180° um eine Längsachse der Halterwelle.

Im Betrieb einer solchen Knotereinrichtung wird bei Fertigstellung eines Quaderballens mittels einer Bindenadel ein erster Abschnitt des jeweiligen Garns zu der Halteeinrichtung geführt, mittels der bereits ein zweiter Abschnitt desselben Garns gehalten ist. Das Garn wird mithin ausgehend von der Halteeinrichtung um den Quaderballen und wieder zurück zu Halteeinrichtung geführt, sodass es den Quaderballen umlaufend einfasst. Die Bindenadel ist hierbei dafür verantwortlich, das Garn nach Fertigstellung eines Quaderballens an einem Ende des Quaderballens entlang zu der Halteeinrichtung zu führen, wobei das Garn typischerweise von einer Unterseite des Presskanals her mittels der Bindenadel angereicht wird. Infolge der Zuführung des Garns mittels der Bindenadel liegen beide Abschnitte des Garns auf dem Knoterhaken des Knoters auf, sodass sie im Weiteren mittels des Knoterhakens verknotet werden können. Zu diesem Zweck mit der Knoter mittels der Antriebsscheibe drehangetrieben, wobei der Knoterhaken eine Drehung um eine Längsachse der Knoterwelle von in der Regel 360° ausführt. Im Zuge dieser Bewegung wird die Zunge des Knoterhakens ausgehend von einer Schließstellung in eine Offenstellung und zurück in die Schließstellung überführt. Im Zuge dieser Bewegung werden zunächst erste Teilabschnitte des Garns, die auf dem Knoterhaken bzw. auf der Zunge aufliegen, mittels der Zunge angehoben, wobei infolge der Drehung des Knoterhakens zweite Teilabschnitte unterhalb der Zunge auf dem Knoterhaken abgelegt werden. Sobald die Zunge zurück in ihre Schließstellung überführt ist, sind die zweiten Teilabschnitte unter der Zunge gefasst, sodass die zweiten Teilabschnitte bei Ausübung einer Zugkraft auf das Garn unter den ersten Teilabschnitten, die auf der Zunge liegen, durchgezogen werden, sodass sich in gewünschter Weise ein Knoten bildet.

Zuvor wird jedoch zunächst die Halteeinrichtung mittels der Antriebsscheibe drehangetrieben, wobei das Halteelement um eine Längsachse der Halterwelle gedreht wird. Im Zuge dieser Drehung des Halteelements wird der mittels der Bindenadel angereichte Abschnitt des Garns mittels des Halteelements erfasst, typischerweise mittels einer Klemmwirkung, und dem Schneidelement zugeführt, mittels dessen das Garn durchgeschnitten wird. Auf diese Weise wird ein neues Ende des Garns gebildet, das fortan mittels des Halteelements gehalten ist. Das andere Ende ist frei, sodass der Knoten in der vorstehend beschriebenen Weise gebildet und aus dem Knoter herausgezogen werden kann. Die so gebildete Endlosschlaufe des Garns, die nunmehr um den Quaderballen herum gelegt ist, ist entsprechend losgelöst von der Vorratsrolle des Garns.

Knotereinrichtungen sowie Verfahren der vorstehend beschriebenen Art sind im Stand der Technik bereits bekannt. Hierzu wird beispielhaft auf die europäische Patentanmeldung EP 2 564 686 A1 hingewiesen. Diese beschreibt eine Ballenpresse, die einen Presskanal umfasst, in dem ein Verdichterkolben zyklisch vor und zurück bewegbar ist, um einen Quaderballen zu formen. Ferner umfasst die Ballenpresse einen Garnvorrat und eine Knotereinrichtung, die an einer Seite des Presskanals angeordnet ist. Die Knotereinrichtung umfasst eine Halteeinrichtung zum lösbaren Halten eines Endabschnitts eines Garns, ein Garnumlenkelement und eine Zunge. Das Garn erstreckt sich zwischen der Halteeinrichtung und dem Garnvorrat über das Garnumlenkelement und einer dem Verdichterkolben abgewandten Seite des Quaderballens vom Verdichterkolben abgewandten Seite des Quaderballens. Die Zunge ist angeordnet, um einen Knoten in einem ersten Abschnitt des Garns zu knüpfen, der sich zwischen der Halteeinrichtung und dem Garnumlenkelement erstreckt. Eine weitere Knotereinrichtung ist z.B. aus EP 3 949 719 A1 bekannt.

Bekannte Knotereinrichtungen haben sich in der Praxis zwar bewährt, lassen jedoch an Zuverlässigkeit hinsichtlich einer sicheren Knotenbildung vermissen. Insbesondere kommt es in der Praxis immer wieder vor, dass ein Knoten nicht bestimmungsgemäß fertiggestellt wird, weil beispielsweise das Garn sich vorzeitig von dem Knoter oder der Halteeinrichtung löst oder nicht richtig mittels der Zunge erfasst wird.

Der vorliegenden Anmeldung liegt mithin die Aufgabe zugrunde, eine Knotereinrichtung der vorstehend beschriebenen Art dahingehend zu verbessern, dass Knoten zuverlässiger gebildet werden.

Die zugrunde liegende Aufgabe wird erfindungsgemäß mittels einer Knotereinrichtung mit den Merkmalen des Anspruchs 1 gelöst. Vorteilhafte Ausgestaltungen ergeben sich aus den zugehörigen Unteransprüchen.

Die erfindungsgemäße Knotereinrichtung ist dadurch gekennzeichnet, dass die Antriebsscheibe einen sich an den ersten Zahnabschnitt in einem Restwinkelbereich anschließenden Konturabschnitt aufweist. Dieser wirkt derart mit dem Zahnrad des Knoters zusammen, dass der Drehzyklus des Knoters vor dem Drehzyklus der Halteeinrichtung einsetzt. Ein Drehzyklus wird hierbei in dem Moment als beendet angesehen, in dem ein jeweiliger Knoten gebildet und das Garn aus dem Knoterhaken herausgezogen ist. Der sich dann anschließende nächste Drehzyklus des Knoters beginnt mit dem Beginn der nächsten Drehung der Knoterhakens. Der nächste Drehzyklus der Halteeinrichtung beginnt entsprechend mit dem Beginn der nächsten Drehung des Halteelements. Zwischen dem Ende eines jeweiligen Drehzyklus und dem Beginn des sich anschließenden Drehzyklus können sich sowohl der Knoter als auch die Halteeinrichtung in Ruhe befinden. Eine volle Umdrehung der Antriebsscheibe führt mithin zwar zwingend jeweils zu einem vollen Drehzyklus sowohl der Halteeinrichtung als auch des Knoters; allerdings können diese Drehzyklen von unterschiedlicher Dauer sein und insbesondere zeitlich kürzer andauern als eine volle Umdrehung der Antriebsscheibe. Beispielsweise ist es denkbar, dass ein voller Drehzyklus des Knoters im Zuge einer Drehung der Antriebsscheibe um deren Drehachse von 300° ausgeführt wird und der Knoter entsprechend die verbleibenden 60° der Drehung der Antriebsscheibe sich zwischen aufeinander folgenden Drehzyklen in einer Ruhephase befindet.

Der erfindungsgemäße Beginn des Drehzyklus des Knoters vor dem Beginn des Drehzyklus der Halteeinrichtung hat in einem Betrieb der Knotereinrichtung die Auswirkung, dass der Knoter, insbesondere dessen Knoterhaken, bereits seine Drehung um eine Längsachse der Knoterwelle beginnt, bevor eine Drehung des Halteelements um eine Längsachse der Halterwelle beginnt. Dieses "Vordrehen" des Knoters wird erfindungsgemäß mittels des Konturabschnitts erzielt, der sich über einen Restwinkelbereich in dem ersten Radius um die Drehachse der Antriebsscheibe erstreckt, in dem sich auch der erste Zahnabschnitt um die Drehachse der Antriebsscheibe erstreckt. Der Knoter und der Konturabschnitt wirken hierbei derart zusammen, dass sich die beschriebene Vordrehung des Knoterhakens ergibt. Der erste Zahnabschnitt und der Konturabschnitt bilden bevorzugt einen vollständigen Kreisring in dem ersten Radius um die Drehachse der Antriebsscheibe aus. Der Teilwinkelbereich des ersten Zahnabschnitts und der Restwinkelbereich des Konturabschnitts ergänzen sich mithin zu 360°.

Die erfindungsgemäße Knotereinrichtung hat viele Vorteile. Insbesondere hat sich herausgestellt, dass die Knotereinrichtung in Bezug auf eine zuverlässige Knotenbildung gegenüber den bekannten Knotereinrichtungen im Vorteil ist. Dies ist darauf zurückzuführen, dass die zeitliche Abfolge der Bewegungen des Knoters und der Halteeinrichtung optimiert wurde. Wie dargelegt, beginnt der Drehzyklus des Knoters vor dem Drehzyklus der Halteeinrichtung. Hierdurch hat der Knoter einen "Vorsprung" gegenüber der Halteeinrichtung, insbesondere bevor mittels der Halteeinrichtung infolge einer Drehbewegung des Halteelements in Zusammenwirkung mit dem Schneidelement das Garn durchgeschnitten wird. Dieser Zeitpunkt ist besonders kritisch, da in dem Moment des Durchschneidens des Garns die vorbereitenden Maßnahmen zur schlussendlichen Bildung eines jeweiligen Knotens, die mittels des Knoters vorgenommen werden, abgeschlossen sein sollten. Im Stand der Technik ist jedoch immer wieder zu beobachten, dass das Garn bereits durchgeschnitten wird, bevor die Drehbewegung des Knoters abgeschlossen ist oder die mittels des Knoters verarbeiteten Abschnitte des Garns sicher gefasst sind. Daraufhin kann das infolge des Schnitts mittels des Schneidelements gebildete Ende des Garns dem Knoter "entkommen" wodurch die Bildung eines gewünschten Knotens gestört wird. Durch das beschriebene Vordrehen des Knoters wird nunmehr erfindungsgemäß erreicht, dass die Vorbereitungen zur Bildung des nächsten Knotens beendet sind, bevor das Durchschneiden des Garns infolge der Drehbewegung des Halteelements stattfindet. In Versuchen hat sich gezeigt, dass die Bildung von Knoten mittels der Knotereinrichtung deutlich zuverlässiger erfolgt als im Stand der Technik.

Ein weiterer Vorteil der erfindungsgemäßen Knotereinrichtung besteht darin, dass das Risiko eines versehentlichen Ausreißens des Garns aus dem Halteelement reduziert wird. Dieses Risiko ergibt sich prinzipbedingt aus der Drehbewegung des Knoters, die zu einem Aufwickeln des Garns um den Knoterhaken führt. Hierdurch wird eine gewisse Länge des Garns "verbraucht", sodass das Garn zu dem Knoter gezogen wird. Wenn dieses Ziehen des Garns von der Seite aus erfolgt, an der die Halteeinrichtung angeordnet ist, besteht das Risiko, dass der Knoter das Garn aus dem Halteelement herausreißt. Dies kann insbesondere dann geschehen, wenn das Garn auf der der Halteeinrichtung abgewandten Seite des Knoters ("Ballenseite") bereits zwecks Durchführung des Knotenbildungsvorgangs mittels einer Greifeinrichtung gegriffen ist und mithin das Garn nicht länger von der Ballenseite aus frei nachgezogen werden kann. Dies ist typischerweise der Fall, da eine solche Greifeinrichtung im Stand der Technik die Abschnitte des Garns typischerweise bereits greift, bevor der Knoter seinen nächsten Drehzyklus beginnt. Dadurch, dass erfindungsgemäß die Drehbewegung des Knoters frühzeitig einsetzt, kann der Knoter die benötigte Länge des Garns noch von der Ballenseite her ziehen bevor die Greifeinrichtung die beiden Abschnitte des Garns gegriffen hat, sodass die Abschnitte des Garns, die zwischen dem Knoter und der Halteeinrichtung gespannt sind, nicht beeinträchtigt werden. Das Risiko einer erfolglosen Knotenbildung infolge eines Ausreißens des Garns aus der Halteeinrichtung ist hierdurch reduziert.

In der erfindungsgemäßen Knotereinrichtung weist der Konturabschnitt der Antriebsscheibe einen ersten Konturbereich auf, der in Drehrichtung der Antriebsscheibe um deren Drehachse betrachtet an einen Anfang des ersten Zahnabschnitts angeschlossen ist. Der Konturbereich ist derart geformt und wirkt derart mit dem Knoter zusammen, dass der Knoter vor Eingriff seines Zahnrads mit dem ersten Zahnabschnitt gezwungen in einem Drehsinn um die Längsachse der Knoterwelle vordrehbar ist. Dieser Drehsinn entspricht dem Drehsinn, in dem der Knoter im Zuge des sich anschließenden Eingriffs seines Zahnrads mit dem ersten Zahnabschnitt antreibbar ist. Die beschriebene Ausgestaltung ermöglicht eine zuverlässige Drehung des Knoters bevor der eigentliche Eingriff des Zahnrads mit dem ersten Zahnabschnitt stattfindet. Auf diese Weise ist es besonders einfach möglich, die Drehung des Knoters bzw. dessen Drehzyklus einzusetzen bevor die Drehung bzw. der Drehzyklus der Halteeinrichtung beginnt. Ferner ist diese Variante besonders zu bevorzugen, da das vorlaufende Drehen des Knoters in einem kleinen Winkelbereich möglich ist, insbesondere in einem Winkelbereich zwischen 10° und 40°, vorzugsweise in einem Winkelbereich zwischen 20° und 30°.

Erfungsgemäß weist der Konturabschnitt einen sich zwischen dem ersten Konturbereich und dem ersten Zahnabschnitt erstreckenden zweiten Konturbereich auf. Dieser erstreckt sich mithin insbesondere von einem in Drehrichtung der Antriebsscheibe betrachteten Ende des ersten Zahnabschnitts und dem ersten Konturbereich. Der zweite Konturbereich ist derart geformt und wirkt derart mit dem Zahnrad des Knoters zusammen, dass der Knoter zumindest in einem Teil eines jeweiligen Drehzyklus, in der der zeitweise Knoter nicht bestimmungsgemäß drehangetrieben wird, der Drehzyklus jedoch noch nicht beendet ist, in einem Winkelbereich um eine Längsachse der Knoterwelle frei relativ zu der Antriebsscheibe verdrehbar ist. Diese freie Verdrehbarkeit ist bevorzugt auf den genannten Winkelbereich beschränkt, sodass der Knoter nicht vollständig frei um die Längsachse der Knoterwelle gedreht werden kann. Insbesondere kann der Knoter in einem Winkelbereich zwischen 10° und 40°, vorzugsweise zwischen 15° und 30° frei verdrehbar sein, wobei bevorzugt der Winkelbereich dadurch begrenzt ist, dass das Zahnrad gegen eine Oberfläche des zweiten Konturbereich schlägt und hierdurch ein weiteres Drehen des Knoters verhindert. Die freie Verdrehbarkeit des Knoters in dem zweiten Konturbereich hat den Vorteil, dass sich der Knoter nach Beendigung seiner Drehung, die mittels des Zusammenwirkens des ersten Zahnabschnitts der Antriebsscheibe und dem Zahnrad angetrieben ist, zumindest ein Stück weit zurückdrehen kann. Auf diese Weise ist die Möglichkeit geschaffen, den Knoter vor Ende des jeweiligen Drehzyklus und insbesondere vor Beginn des nächsten Drehzyklus in der beschriebenen Weise um den zurück gedrehten Winkel wieder vorzudrehen und die hierdurch bedingten, vorstehend beschriebenen Effekte zu erzielen. Mit anderen Worten wird durch die Einräumung der Möglichkeit, dass sich der Knoter frei verdrehen kann, der nötige Raum geschaffen, den der Knoter für den nächsten Drehzyklus benötigt, um in erfindungsgemäßer Weise seine Drehung vor Beginn des Drehzyklus der Halteeinrichtung einzusetzen. Dieser Winkelbereich muss daraufhin insbesondere nicht bei der Drehung des Knotens zuvor "eingespart" werden.

Sofern der Konturabschnitt den vorstehend beschriebenen zweiten Konturbereich aufweist, kann es weiterhin besonders vorteilhaft sein, wenn besagter zweiter Konturbereich derart geformt ist und mit dem Zahnrad des Knoters zusammenwirkt, dass der Knoter bei einem bestimmungsgemäßen Betrieb der Knotereinrichtung unmittelbar nach Ende des Eingriffs des Zahnrads mit dem ersten Zahnabschnitt in seiner dann aktuellen Drehposition relativ zu der Antriebsscheibe arretiert ist. Mit anderen Worten ist der zweite Konturabschnitt derart ausgebildet, dass die Möglichkeit zur freien Verdrehung des Knoters in einem Winkelbereich, die vorstehend erläutert ist, nicht unmittelbar nach Beendigung des Eingriffs des Zahnrads des Knoters mit dem ersten Zahnabschnitt vorliegt, sondern erst zu einem späteren Zeitpunkt, zu dem die Antriebsscheibe weiter um ihre Drehachse gedreht ist. Dies hat den besonderen Vorteil, dass die Bildung des jeweiligen Knotens, die nach Beendigung der Drehbewegung des Knoters noch nicht abgeschlossen ist, zunächst sicher beendet werden kann, bevor dem Knoter die Möglichkeit gegeben wird, sich innerhalb des begrenzten Winkelbereichs frei um die Längsachse der Knoterwelle zu verdrehen. Insbesondere kann der zweite Konturbereich in dem sich an den Zahnabschnitt anschließenden Abschnitt derart ausgebildet sein, dass das Zahnrad an eine Oberfläche des Konturbereichs anliegt und hierdurch in seiner Drehung um die Längsachse der Knoterwelle blockiert ist. Der Übergang hin zu einem Abschnitt des zweiten Konturbereich, in dem die freie Verdrehbarkeit gegeben ist, kann insbesondere darin bestehen, dass der Konturbereich gegenüber dem Zahnrad in radiale Richtung bezogen auf die Längsachse der Knoterwelle zurückspringt und hierdurch dem Zahnrad einen gewissen Bewegungsspielraum einräumt. Mit anderen Worten liegt hierbei das Zahnrad nicht mehr unmittelbar an der Oberfläche des Konturbereich an und kann sich in dem begrenzten Winkelbereich frei um die Längsachse der Knoterwelle verdrehen, bis das Zahnrad an der Oberfläche des Konturbereich anschlägt.

Die erfindungsgemäße Knotereinrichtung weiter ausbildend umfasst der Knoter ein Führelement, das im Zuge eines Drehzyklus des Knoters entlang eines Steuerelements führbar ist. Insbesondere kann das Führelement dem Knoterhaken zugeordnet sein, wobei das Führelement bevorzugt unmittelbar mit der Zunge des Knoterhakens verbunden ist. Die Zusammenwirkung des Führelements mit dem Steuerelement bewirkt die gezwungene Überführung der Zunge zwischen ihrer Schließstellung und ihrer Offenstellung, die in Form einer Schwenkbewegung der Zunge um deren Schwenkachse erfolgt. Diese Ausgestaltung hat den besonderen Vorteil, dass die Drehbewegung des Knoterhakens um die Längsachse der Knoterwelle kinematisch mit der Schwenkbewegung der Zunge gekoppelt werden kann, wobei insbesondere das Steuerelement der Drehung des Knoters bzw. des Knoterhakens nicht folgt. Das Führelement ist hingegen derart angeordnet, dass es gemeinsam mit dem Knoterhaken um die Längsachse der Knoterwelle dreht. Mithin wird das Führelement im Zuge eines Drehzyklus des Knoters relativ zu dem Steuerelement bewegt, wobei das Führelement entlang einer Steuerfläche des Steuerelements geführt werden kann, wodurch die Schwenkbewegung der Zunge um deren Schwenkachse erzwungen wird. Eine entsprechende Ausgestaltung ist dem nachstehenden Ausführungsbeispiels zu entnehmen.

In einer besonders vorteilhaften Ausgestaltung ist das Steuerelement derart schwenkbeweglich gelagert, dass es zumindest in einem begrenzten Winkelbereich um eine Schwenkachse verschwenkbar ist. Die Verschwenkung des Steuerelements erfolgt hierbei vorzugsweise um eine Schwenkachse, die parallel zu der Längsachse der Knoterwelle orientiert ist. In besonders bevorzugter Weise ist die Schwenkachse identisch zu der Längsachse der Knoterwelle. Bei dieser Ausgestaltung ist das Steuerelement koaxial zu der Knoterwelle angeordnet. Die Verschwenkbarkeit des Steuerelements in dem Winkelbereich führt dazu, dass das Steuerelement in jedem Drehzyklus des Knoters ausgehend von einer Startposition in eine Endposition und wieder zurück schwenkbar ist. Diese Ausgestaltung hat den besonderen Vorteil, dass die Überführung der Zunge von der Offenstellung in die Schließstellung verbessert werden kann. Insbesondere kann die Zunge stärker vorgespannt werden, bevor sie in ihre Schließstellung überführt wird. Dies liegt darin begründet, dass das schlagartige Zuschnappen der Zunge sowohl bedingt durch eine Druckkraft angetrieben ist, die von einem Andrückelement ausgeübt wird, als auch durch ein schlagartiges Verschwenken des Steuerelements von seiner Endposition in seine Startposition. Dies trägt dazu bei, dass die Zunge sicherer schließt als dies im Stand der Technik der Fall ist. Hierdurch ist eine weitere Fehlerquelle im Zuge der Bildung eines Knotens mittels der Knotereinrichtung ausgeräumt.

Die zugrunde liegende Aufgabe wird ferner in verfahrenstechnischer Hinsicht mittels des Verfahrens mit den Merkmalen des Anspruchs 5 gelöst. Vorteilhafte Ausgestaltungen ergeben sich aus den zugehörigen Unteransprüchen.

Das erfindungsgemäße Verfahren ist dadurch gekennzeichnet, dass im Zuge eines Drehzyklus die Drehung des Knoters zeitlich vor der Drehung der Halteeinrichtung beginnt. Die sich hierdurch ergebenden Vorteile sind vorstehend bereits dargelegt. Insbesondere wird die Zuverlässigkeit der Knotenbildung verbessert, da das "Timing" zwischen Knoter und Halteeinrichtung gegenüber dem Stand der Technik verändert ist. Insbesondere ist mittels der erfindungsgemäßen Vorgehensweise die mittels des Knoters bewirkte Formung einer Vorstufe eines Knotens beendet, bevor mittels der Halteeinrichtung, genauer gesagt mittels des Schneidelements der Halteeinrichtung, das von der Bindenadel angereichte Garn durchgeschnitten wird. Ferner ist das Risiko eines Ausreißens des Garns aus dem Halteelement verringert, da bei Beginn des Drehzyklus des Knoters eine hierfür benötigte Länge des Garns noch von der Ballenseite aus gezogen werden kann, sodass keine zusätzliche Zugkraft auf den Abschnitt des Garns ausgeübt wird, der sich zwischen dem Knoter und der Halteeinrichtung erstreckt. Das erfindungsgemäße Verfahren ist mittels der erfindungsgemäßen Knotereinrichtung besonders einfach durchführbar.

Einer besonders vorteilhaften Ausgestaltung wird der Knoter vor Beginn der Drehung der Halteeinrichtung um mindestens 20°, vorzugsweise mindestens 30°, weiter vorzugsweise mindestens 40°, um die Längsachse der Knoterwelle gedreht. Eine Vordrehung in dieser Größenordnung hat sich als besonders vorteilhaft erwiesen, um die Zuverlässigkeit der Knotenbildung maßgeblich zu erhöhen.

Das erfindungsgemäße Verfahren weiter ausgestaltend wird der Knoter während eines Drehzyklus zunächst um einen Betrag von mehr als 360° in einem ersten Drehsinn gedreht und sodann um die Differenz zwischen dem Betrag seiner Drehung und 360° in einem entgegengesetzten zweiten Drehsinn wieder zurückgedreht. Am Ende des jeweiligen Drehzyklus ist der Knoter mithin effektiv um 360° um die Längsachse der Knoterwelle gedreht worden. Die Drehung in der beschriebenen Weise "vor und zurück" ist besonders vorteilhaft, um die gewünschte Vordrehung des Knoters durchzuführen, hierbei jedoch gleichzeitig einen Drehwinkel, den der Knoter infolge des Zusammenwirkens seines Zahnrads mit dem ersten Zahnabschnitt um die Längsachse der Knoterwelle gedreht wird, nicht reduzieren zu müssen. Mithin wird der Knoter insgesamt für die Vorbereitung eines jeweiligen Knotens um mehr als 360° gedreht.

Besonders bevorzugt wird der Knoter erst im Zuge der endgültigen Bildung des Knotens wieder um die genannte Differenz zwischen dem Betrag seiner Drehung und 360° in dem zweiten Drehsinn zurückgedreht. Diese Drehung ist bevorzugt dadurch angetrieben, dass das Garn aus der Knotereinrichtung herausgezogen wird, wobei das Garn in diesem Zustand lediglich mittels des Knoterhakens gehalten ist. Das Herausziehen des Garns aus dem Knoterhaken führt in bekannter Weise zu der schlussendlichen Bildung des gewünschten Knotens, wobei unter Aufbringen einer Zugkraft auf das Garn letzteres aus dem Knoterhaken herausgezogen wird, wobei aufgrund der Fixierung der zweiten Teilabschnitte des Garns, die unter der Zunge liegen, diese verzögert herausgezogen werden und hierbei unter Bildung des Knotens unter den ersten Teilabschnitten durchgezogen werden. Die hierbei auf den Knoterhaken und mithin den gesamten Knoter ausgeübte Zugkraft wird in der bevorzugten Ausführungsform dazu verwendet, die Drehung des Knoters in dem zweiten Drehsinn anzutreiben. Dies hat den Vorteil, dass für die gewünschte Drehung des Knoters keine gesonderte Mechanik oder gesonderte Antriebe notwendig sind.

In einer weiterhin vorteilhaften Ausgestaltung des erfindungsgemäßen Verfahrens wird ein Steuerelement während eines Drehzyklus des Knoters in einem Winkelbereich zwischen einer Startposition und einer Endposition vor und zurück verschwenkt. Das Steuerelement dient zur Steuerung einer Schwenkbewegung der Zunge, die diese im Zuge ihrer Überführung zwischen ihrer Schließstellung und ihrer Offenstellung ausführt. Dies ist vorstehend im Zusammenhang mit der Knotereinrichtung bereits erläutert. Die Verschwenkung des Steuerelements zwischen der Startposition und der Endposition erfolgt vorzugsweise um eine zu der Längsachse der Knoterwelle parallele Schwenkachse, weiter vorzugsweise um die Längsachse der Knoterwelle. Bei letztgenannter Variante sind die Schwenkachse und die Längsachse der Knoterwelle deckungsgleich. Die Verschwenkung des Steuerelements in der beschriebenen Weise hat den Vorteil, dass hierdurch eine Schließkraft, mit der die Zunge von ihrer Offenstellung in ihre Schließstellung überführt wird, erhöht werden kann, sodass die Zunge im Zuge der Überführung von der Offenstellung in die Schließstellung besonders stark beschleunigt wird und hierdurch zuverlässig schließen kann. Hierdurch ist ein zuverlässiges Greifen der zweiten Teilabschnitte des Garns, die unter der Zunge liegen, verbessert.

Weiterhin kann das erfindungsgemäße Verfahren dann von besonderem Vorteil sein, wenn der Drehzyklus des Knoters beginnt, bevor die Abschnitte des Garns auf der der Halteeinrichtung abgewandten Ballenseite des Knoters mittels einer Greifeinrichtung gegriffen sind. Dies hat den besonderen Vorteil, dass im Zuge der Vordrehung des Knoters das Garn noch von der Ballenseite aus gezogen werden kann. Dies wäre verhindert, wenn die Greifeinrichtung das Garn auf der Ballenseite bereits gegriffen und damit fixiert hätte. In diesem Fall müsste das Garn aus einer anderen Längenreserve gezogen werden, wobei eine Zugspannung auf das Garn aufgebracht wird, was wiederum zu einem ungewollten Ausreißen des Garns aus dem Halteelement der Halteeinrichtung führen kann. Dieses Risiko ist mittels der beschriebenen Vorgehensweise deutlich vermindert.

Die Erfindung ist nachstehend anhand eines Ausführungsbeispiels, das in den Figuren dargestellt ist, näher erläutert. Es zeigt:
- Fig. 1:: Einen Querschnitt durch eine Ballenpresse, die mit einer erfindungsgemäßen Knotereinrichtung ausgestattet ist,
- Fig. 2:: Eine Detailansicht einer erfindungsgemäßen Knotereinrichtung, wobei sich ein Knoter der Knotereinrichtung in einer Ruhephase zwischen zwei Drehzyklen befindet,
- Fig. 3:: Die Knotereinrichtung gemäß Figur 2, wobei sich ein Zahnrad des Knoters in Eingriff mit einem ersten Konturbereich eines Konturabschnitt eine Antriebsscheibe der Knotereinrichtung befindet,
- Fig. 4:: Die Knotereinrichtung gemäß Figur 2, wobei sich Zahnräder sowohl des Knoters als auch einer Halteeinrichtung in kämmendem Eingriff mit zugeordneten Zahnabschnitten der Antriebsscheibe befinden,
- Fig. 5:: Die Knotereinrichtung gemäß Figur 2, wobei der Knoter seine Drehung in einem ersten Drehsinn für den aktuellen Drehzyklus beendet hat,
- Fig. 6:: Die Knotereinrichtung gemäß Figur 2, wobei der Knoter um einen Betrag gegenüber seiner vorigen Drehstellung zurückgedreht und der Drehzyklus des Knoters damit beendet sind,
- Fig. 7:: Ein Detail der Antriebsscheibe,
- Fig. 8:: Eine Explosionsdarstellung eines Knoterhakens des Knoters, der mit einem Steuerelement zusammenwirkt,
- Fig. 9:: Der Knoterhaken gemäß Figur 8 zu Beginn des Drehzyklus des Knoters,
- Fig. 10:: Der Knoterhaken gemäß Figur 8 während des Drehzyklus des Knoters, wobei eine Zunge des Knoterhakens in einer Zwischenstellung zwischen ihrer Schließstellung und ihrer Offenstellung befindet,
- Fig. 11:: Der Knoterhaken gemäß Figur 8, wobei sich die Zunge in ihrer Offenstellung befindet.

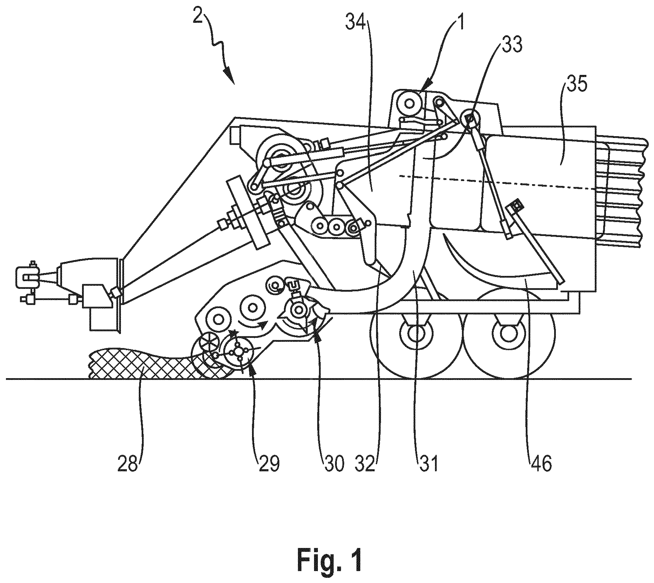

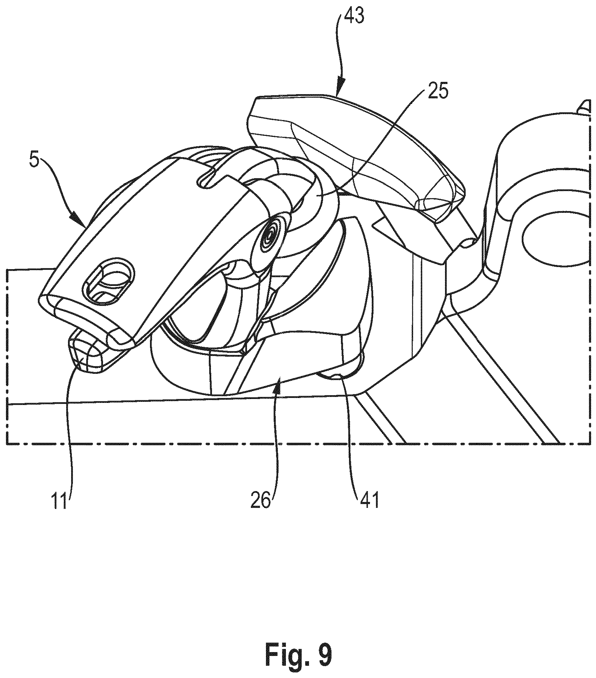

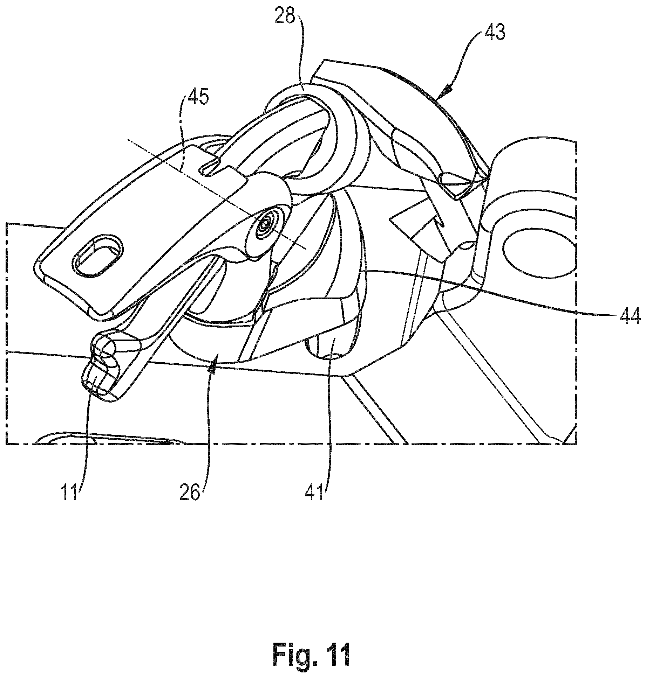

Ein Ausführungsbeispiel, das in den **Figuren 1 bis 11** dargestellt ist, betrifft eine landwirtschaftliche Quaderballenpresse **2,** die in **Figur 1** in einem Querschnitt dargestellt ist. Die Quaderballenpresse **2** ist dazu geeignet, Erntegut **28,** das auf einem Untergrund aufliegt, mittels einer Pick-up **29** von dem Untergrund aufzuheben und zu verarbeiten. Hierbei wird das Erntegut **28** zunächst einem Häcksler **30** zugeleitet, mittels dessen das Erntegut **28** gehäckselt wird. Sodann wird das Erntegut **28** in einen Vorkanal **31** weitergeleitet und mittels eines Raffers **32** vorverdichtet. Ausgehend von dem Vorkanal **31** wird das Erntegut **28** zyklisch in einen Presskanal **33** überführt, in dem das Erntegut **28** mittels eines sich in dem Presskanal **33** vor und zurück bewegenden Verdichterkolbens **34** erfasst und verdichtet wird. Hierbei wird das Erntegut **28** mit jedem Zyklus des Verdichterkolbens **34** gegen bereits in dem Presskanal **33** befindliches Erntegut gepresst. Da der Presskanal **33** eine rechteckige Querschnittsform aufweist, entstehen auf diese Weise die typischen quaderförmigen Quaderballen. Um das Erntegut nach Fertigstellung eines Quaderballens in der Ballenform zusammenzuhalten, werden die fertigen Quaderballen **35** mit Garn umschlungen, das in Form mehrerer Endlosschlaufen um den Quaderballen **35** herum gelegt wird und auf diese Weise ein ungewünschtes "Auseinanderfallen" des Ernteguts verhindert.

Die Applikation des Garns an einem jeweiligen Quaderballen **35** erfolgt mittels einer Mehrzahl von Knotereinrichtungen **1.** Die Knotereinrichtungen 1 sind in Reihe hintereinander über eine Breite des Presskanals **33** verteilt angeordnet, sodass ein jeweiliger Quaderballen **35** mit einer Mehrzahl der Endlosschlaufen eingefasst werden kann. Jede der Knotereinrichtungen **1** wirkt mit einer Bindenadel **46** zusammen, die dazu geeignet ist, das Garn von einer Unterseite des Presskanals **33** her nach Fertigstellung eines Quaderballens **35** nach oben zu führen und der Knotereinrichtung **1** anzureichern, sodass mittels der Knotereinrichtung **1** unter Bildung eines Knotens eine Endlosschlaufe des Garns gebildet und der Quaderballen **35** diese Weise eingefasst werden können.

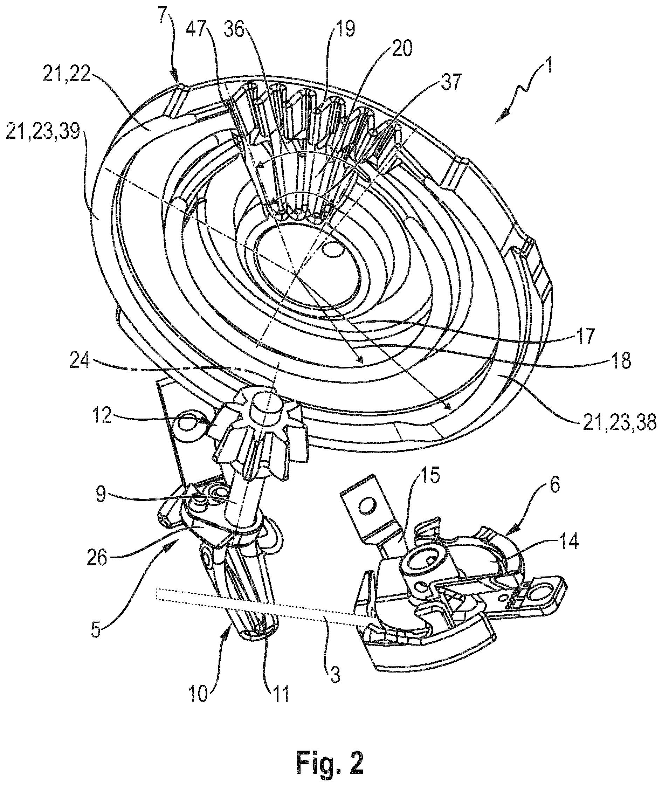

Die Knotereinrichtung **1,** die sich besonders gut anhand der **Figuren 2 bis 11** ergibt, umfasst einen Knoter **5,** eine Halteeinrichtung **6** sowie eine Antriebsscheibe **7.** Der Knoter **5** umfasst einen Knoterhaken **10,** der wiederum über eine schwenkbewegliche Zunge **11** verfügt, die um eine Schwenkachse **45** verschwenkbar ausgebildet ist. Dies wird nachstehend gesondert erläutert. Ferner umfasst der Knoter **5** eine Knoterwelle **9,** die sich entlang einer Längsachse **24** erstreckt. Die Knoterwelle **9** ist mit einem Zahnrad **12** gekoppelt, mittels dessen der Knoter **5** insgesamt mit der Antriebsscheibe **7** zusammenwirkt. Sowohl das Zahnrad **12** als auch der Knoterhaken **10** sind jeweils in Drehmoment übertragender Weise mit der Knoterwelle **9** verbunden, sodass ein Drehantrieb über das Zahnrad **12** über die Knoterwelle **9** auf dem Knoterhaken **10** übertragbar ist. Der Knoter **5** dient dazu, zwei Abschnitte **3, 4** eines jeweiligen Garns miteinander zu verknoten. Hierzu wird der Knoterhaken **10** in dem gezeigten Beispiel um die Längsachse **24** der Knoterwelle **9** angetrieben, sodass sich der Knoterhaken **10** rotatorisch bewegt. Die Steuerung, zu welcher Zeit bzw. über welchen Zeitraum der Knoter **5** angetrieben werden soll, erfolgt mittels der Antriebsscheibe **7.**

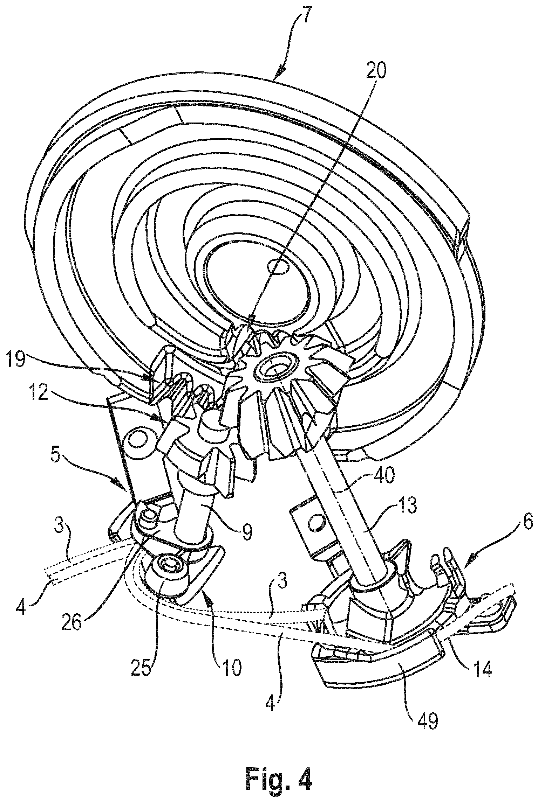

Ebenfalls wird die Halteeinrichtung **6** über die Antriebsscheibe **7** angetrieben. Hierzu umfasst die Halteeinrichtung 6 vergleichbar zu dem Knoter **5** eine Halterwelle **13,** die sich entlang einer Längsachse **40** erstreckt. Ferner umfasst die Halteeinrichtung **6** ein Halteelement **14,** das an einem der Antriebsscheibe **7** abgewandten Ende der Halterwelle **13** angeordnet ist. Das Halteelement **14** ist dazu eingerichtet, das Garn temporär festzuhalten, sodass mittels des Knoters **5** ein jeweiliger Knoten gebildet werden kann. Ferner umfasst die Halteeinrichtung **6** ein Schneidelement **15,** mittels dessen das Garn abschneidbar bzw. durchtrennbar ist. Zwecks Antriebs des Halteelements **14** umfasst die Halteeinrichtung **6** ebenfalls ein Zahnrad **16,** das in Drehmoment übertragender Weise mit der Halterwelle **13** gekoppelt ist. Das Zahnrad **16** ist dazu eingerichtet, mit der Antriebsscheibe **7** zusammenzuwirken, sodass die Halteeinrichtung **6** zyklisch betreibbar ist. Die Halteeinrichtung **6** mit all ihren Komponenten ergibt sich besonders gut anhand von **Figur 4****.**

Die Antriebsscheibe **7** wird während eines Betriebs der Quaderballenpresse **2** fortwährend um eine Drehachse **8** drehangetrieben. Sie weist eine Kontur auf, die darüber bestimmt, in welcher Weise die Antriebsscheibe **7** sowohl mit dem Knoter **5** als auch mit der Halteeinrichtung 6 zusammenwirkt. Insbesondere umfasst die Antriebsscheibe **7** zwei Zahnabschnitte **19, 20,** die auf verschiedenen Radien **17, 18** um die Drehachse **8** an der Antriebsscheibe **7** ausgebildet sind. Diese Zahnabschnitte **19, 20** sind dazu eingerichtet, mit den Zahnrädern **12, 16** des Knoters **5** bzw. der Halteeinrichtung **6** zu kämmen und letztere auf diese Weise anzutreiben. Hierbei wird mit jeder vollen Umdrehung der Antriebsscheibe **7** ein voller Drehzyklus sowohl des Knoters **5** als auch der Halteeinrichtung 6 bewirkt. In dem gezeigten Beispiel erstrecken sich die Zahnabschnitte **19, 20** über verschiedene Teilwinkelbereiche **36, 37,** wobei in Zusammenwirkung des Zahnrads **12** des Knoters **5** mit dem ersten Zahnabschnitt **19** der Knoterhaken **10** bei jeder vollen Umdrehung der Antriebsscheibe **7** eine vollständige Drehung um 360° ausführt. Im Unterschied dazu führt das Halteelement **14** der Halteeinrichtung **6** bei jeder Umdrehung der Antriebsscheibe **7** eine halbe Drehung um 180° um die Längsachse **40** der Halterwelle **13** aus. Dies ist durch die korrespondierende Ausgestaltung der Zahnabschnitte **19, 20** sowie der Zahnräder **12, 16** vorgegeben.

Die Antriebsscheibe **7** ist im Weiteren derart ausgebildet, dass sie einen Konturabschnitt **21** aufweist, der sich in einem an den ersten Zahnabschnitt **19** anschließenden Restwinkelbereich erstreckt. Der Konturabschnitt **21** wirkt derart mit dem Zahnrad **12** des Knoters **5** zusammen, dass der Drehzyklus des Knoters **5** vor dem Drehzyklus der Halteeinrichtung **6** einsetzt. Der Restwinkelbereich erstreckt sich in dem gezeigten Beispiel über die Differenz zwischen 360° und dem Teilwinkelbereich **36** des ersten Zahnabschnitts **19.** Um den Drehzyklus des Knoters **5** vor dem Drehzyklus der Halteeinrichtung **6** zu beginnen, weist der Konturabschnitt **21** in dem gezeigten Beispiel einen ersten Konturbereich **22** auf, der in Drehrichtung der Antriebsscheibe **7** betrachtet an einen Anfang **47** des ersten Zahnabschnitt **19** angeschlossen ist. Der Konturbereich **22** ist derart geformt und wirkt derart mit dem Zahnrad **12** des Knoters **5** zusammen, dass der Knoter **5** unmittelbar vor Eingriff seines Zahnrads **12** mit dem ersten Zahnabschnitt **19** gezwungen um die Längsachse **24** der Knoterwelle **9** gedreht wird. Diese Drehung erfolgt in einem Drehsinn, der dem Drehsinn entspricht, in dem der Knoter **5** sich im Zuge des Eingriffs seines Zahnrads **12** mit dem ersten Zahnabschnitt **19** dreht. Mithin wird das Zahnrad **12** - und mit ihm der Rest des Knoters **5** - vor dem Eingriff mit dem ersten Zahnabschnitt **19** "vorgedreht". In dem gezeigten Beispiel erfolgt diese Vordrehung um einen Winkel von 30°. Dies wird in dem gezeigten Beispiel dadurch erreicht, dass der Konturbereich **22** in Form einer Rampe ausgebildet ist, die mit dem Zahnrad **12** zusammenwirkt. Während das Zahnrad **12** in einer Ruhephase zwischen zwei Drehzyklen des Knoters **5** in einem Winkelbereich frei um die Längsachse **24** der Knoterwelle **9** relativ zu der Antriebsscheibe **7** verdrehbar ist, zwingt der rampenförmig ausgebildete Konturbereich **22** das Zahnrad **12** dazu, die gewünschte Vordrehung vorzunehmen. Insbesondere wird ein an einer Oberfläche des Konturbereichs **22** anliegender Zahn **48** des Zahnrads **12** derart "hochgedrückt", dass der Knoter **5** die gewünschte Drehung vornimmt.

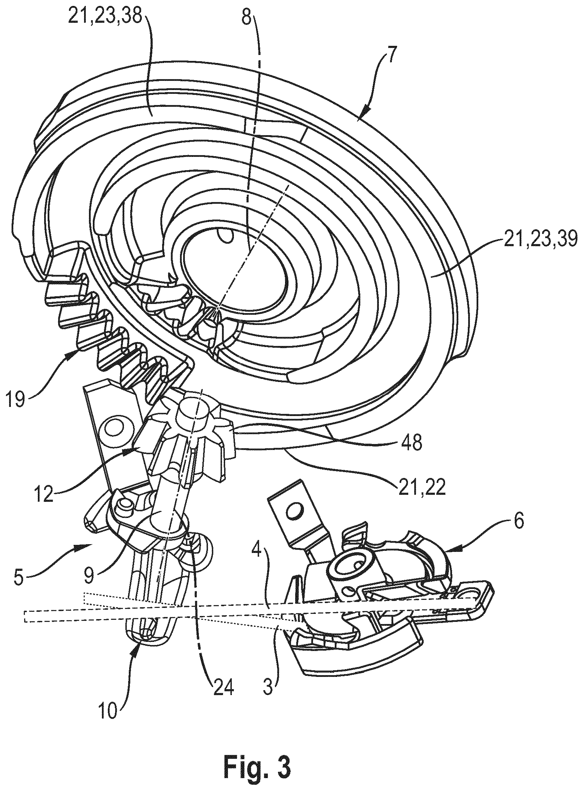

Die Stellung des Knoters **5** vor der Vordrehung, d.h. vor dem Zusammenwirken des Zahnrads **12** mit dem Konturbereich **22** des Konturabschnitts **21,** ist anhand von **Figur 2** erkennbar. In diesem Zustand ist ein einzelner Abschnitt **3** des Garns mittels der Halteeinrichtung **6** gehalten und derart auf dem Knoterhaken **10** abgelegt, dass der Abschnitt **3** auf der Zunge **11** aufliegt. Die Stellung des Knoters **5** bei Abschluss der Vordrehung und vor Eingriff mit dem ersten Zahnabschnitt **19** ist anhand von **Figur 3** erkennbar. Zu diesem Zeitpunkt ist bereits der zweite Abschnitt **4** des Garns mittels der Bindenadel **46** der Knotereinrichtung **1** zugeführt worden, wobei nunmehr beide Abschnitte **3, 4** des Garns auf der Zunge **11** des Knoterhakens **10** aufliegen.

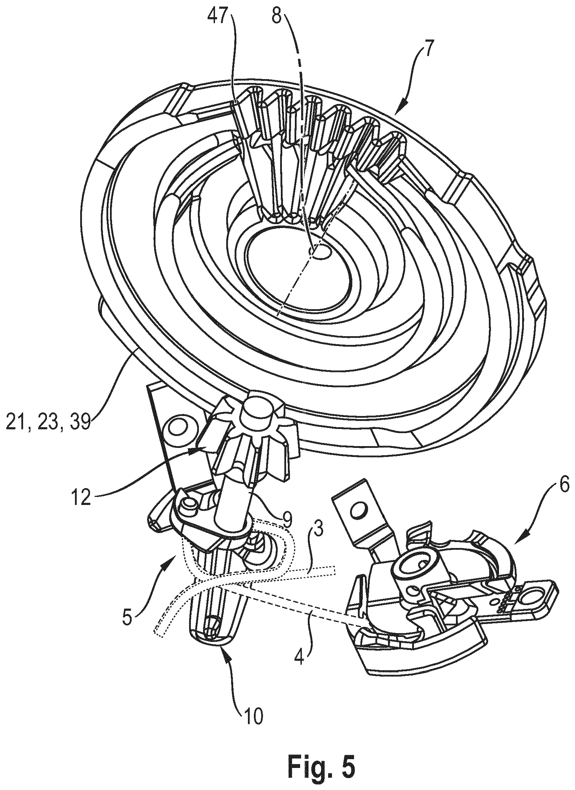

Im Weiteren wird zum einen der Drehzyklus des Knoters **5,** der mit der Vordrehung begonnen hat, infolge des kämmenden Eingriffs des Zahnrads **12** mit dem ersten Zahnabschnitt **19** fortgesetzt und zum anderen der Drehzyklus der Halteeinrichtung **6** infolge des Eingriffs des Zahnrads **16** mit dem zweiten Zahnabschnitt **20** begonnen. In der Folge werden die beiden Abschnitte **3, 4** des Garns mittels des Knoterhakens **10** "aufgewickelt" wobei infolge der Zusammenwirkung eines Führelements **25** mit einem Steuerelement **26,** die nachstehend gesondert beschrieben ist, die Zunge **11** um ihre Schwenkachse **45** verschwenkt und hierdurch in einer Offenstellung überführt wird. Ein Zwischenzustand dieser Bewegung ist anhand von **Figur 4** erkennbar. Hierdurch werden erste Teilabschnitte des Garns, die auf der Zunge **11** aufliegen, angehoben, wobei infolge der Drehung des Knoterhakens **10** zweite Teilabschnitte des Garns unterhalb der Zunge **11** auf dem Knoterhaken **10** abgelegt werden. Die Zunge **11** schnappt daraufhin zu, sodass sie schließlich wieder in ihrer Schließstellung vorliegt. Dies ist besonders gut anhand von **Figur 5** erkennbar.

Infolge des Drehantriebs der Halteeinrichtung **6,** die mit einer Verdrehung des Halteelements **14** um die Längsachse **40** der Halterwelle **13** um 180° einhergeht, wird zum einen der Abschnitt **4** des mittels der Bindenadel **46** angereichten Garns fixiert und zum anderen mittels des Schneidelements **15** abgeschnitten. Das freie Ende des Garns, das auf diese Weise gebildet wird, ist dem in seiner Bildung befindlichen Knoten zugeordnet, während der Abschnitt des Garns, der einer in den Figuren nicht dargestellten Vorratsrolle zugeordnet ist, mittels des Halteelements **14** gehalten ist. Letztgenanntes Halteelement **14** ist in dem gezeigten Beispiel von einem sogenannten Klemmrad gebildet, mittels dessen das Garn in klemmender Weise gehalten ist. Hierbei wird das Garn zwischen dem verdrehbar um die Längsachse **40** der Halterwelle **13** gelagerten Halteelement **14** und einer unteren Gegenplatte **49** verklemmt.

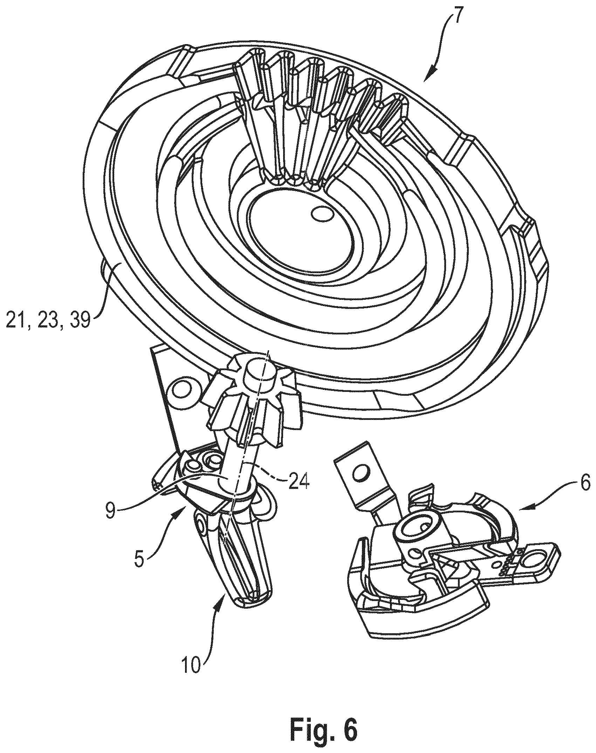

An den zweiten Zahnabschnitt **20** anschließend ist die Antriebsscheibe **7** in dem zweiten Radius **18** um die Drehachse 8 mit einem Konturabschnitt versehen, der zu keinem weiteren Antrieb der Halteeinrichtung 6 führt. Der Drehzyklus der Halteeinrichtung **6** ist demzufolge mit dem Ende des Eingriffs zwischen dem Zahnrad **16** und dem zweiten Zahnabschnitt **20** beendet. Mit Ausnahme des genannten Konturbereichs **22** gilt dies grundsätzlich auch für den Konturabschnitt **21,** in dem die Antriebsscheibe **7** mit dem Knoter **5** zusammenwirkt. Allerdings weist in dem gezeigten Beispiel der Konturabschnitt **21** zusätzlich einen zweiten Konturbereich **23** auf, der sich zwischen dem ersten Konturbereich **22** und dem ersten Zahnabschnitt **19** erstreckt. Dieser zweite Konturbereich **23** ist derart geformt, dass der Knoter **5** in einem Winkelbereich um die Längsachse **24** der Knoterwelle **9** freie relativ zu der Antriebsscheibe **7** verdrehbar ist. Die Phase, in der der Knoter **5** mit dem zweiten Konturbereich **23** zusammenwirkt, ist anhand der Zusammenschau der **Figuren 5** **und** **6** veranschaulicht. Der zweite Konturbereich **23** ist in dem gezeigten Beispiel in eine Richtung parallel zu der Drehachse **8** der Antriebsscheibe **7** zurückspringend ausgebildet, sodass das Zahnrad **12** des Knoters **5** seinen unmittelbaren Eingriff mit dem Konturabschnitt **21** verliert. Dies hat zur Folge, dass das Zahnrad **12** in dem genannten Winkelbereich, der hier 30° umfasst, frei relativ zu der Antriebsscheibe **7** verdrehbar ist, wobei diese Drehung durch Anschläge des Zahns **48** sowie eines weiteren Elements des Zahnrads **12** an einer Oberfläche des Konturabschnitts **21** begrenzt ist.

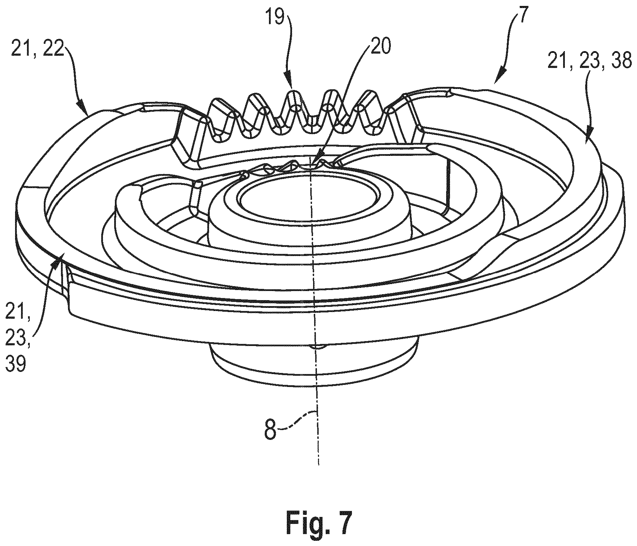

In einem Betrieb der Knotereinrichtung **1** wird der Knoter **5** unmittelbar nach dem Zusammenwirken seines Zahnrads **12** mit dem ersten Zahnabschnitt **19** zunächst gezwungen in einem ersten Abschnitt des Konturbereichs **23** in einer festen Winkelstellung relativ zu der Antriebsscheibe **7** geführt. Dieser Abschnitt des Konturbereichs **23** ist in dem gezeigten Beispiel als Plateau **38** ausgebildet. An dieses Plateau **38** schließt sich der beschriebene zweite Abschnitt des Konturbereichs **23** an, in dem letzterer zurückspringt, sodass die Drehung des Zahnrads **12** in dem genannten Winkelbereich freigegeben ist. Der zweite Abschnitt des Konturbereichs **23** ist entsprechend als Tal **39** ausgebildet. Die Geometrie der Antriebsscheibe **7** ergibt sich besonders gut anhand von **Figur 7****.**

Zu diesem Zeitpunkt - dies ergibt sich anhand von **Figur 5** - ist der Knoten noch nicht fertiggestellt, gleichwohl die Drehung des Knoters **5** um die Längsachse **24** der Knoterwelle **9** in dem ersten Drehsinn bereits abgeschlossen. Da zu diesem Zeitpunkt auch bereits das Garn durchgeschnitten ist, kann nunmehr der Knoten gebildet werden. Dies erfolgt infolge einer weitergehenden Bildung des jeweiligen Quaderballens, wodurch eine Zugkraft auf das Garn ausgeübt wird, mittels der das Garn unter Bildung des gewünschten Knotens aus dem Knoterhaken **5** herausgezogen wird. Diese Vorgehensweise ist im Stand der Technik bekannt. Da die Zugkraft, die über das Garn auf den Knoter **5** ausgeübt wird, bezogen auf die Längsachse **24** eine Richtung wirkt, die dem ersten Drehsinn entgegengesetzt ist, dreht der Knoterhaken **10** in einem dem ersten Drehsinn entgegengesetzten zweiten Drehsinn zurück, bis der Zahn **48** des Zahnrads **12** an der Oberfläche des Konturabschnitts **21** in dem Konturbereich **23** anschlägt. Das Ergebnis dieser "Zurückdrehung" ist in **Figur 6** veranschaulicht. Der Knoter **5** hat nunmehr seine ursprüngliche Stellung bezogen auf die Längsachse **24** eingenommen. Der Drehzyklus ist damit abgeschlossen, woraufhin sich der Knoter 5 in einer Ruhephase befindet, bis der nächste Drehzyklus beginnt. Innerhalb des Drehzyklus hat der Knoter **5** zudem eine Drehung um die Längsachse **24** von insgesamt mehr als 360° ausgeführt. Dies wird anhand eines Vergleichs der **Figuren 2** **und** **5** deutlich. Stattdessen ist der Knoter **5** zunächst um 390° in dem ersten Drehsinn gedreht worden (30° Vordrehung plus 360° vollständige Drehung) und wurde sodann um 30° in dem zweiten Drehsinn zurückgedreht.

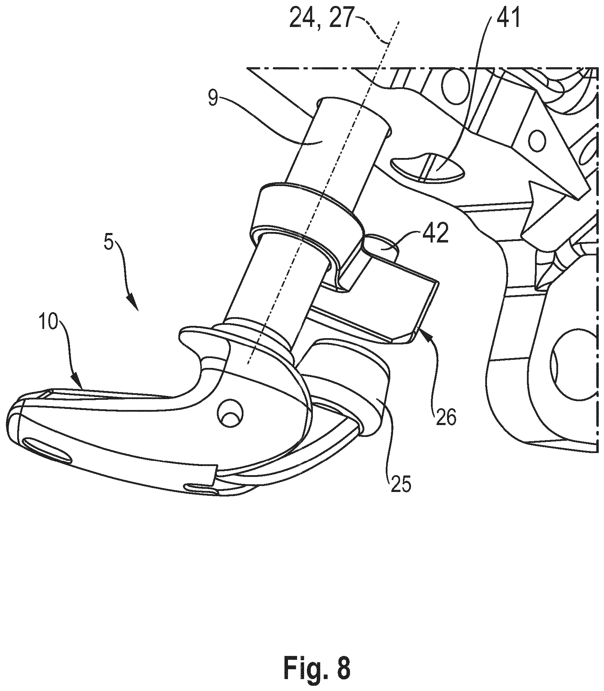

Für die Überführung der Zunge **11** zwischen ihrer Offenstellung und ihrer Schließstellung wird im Weiteren auf die **Figuren 8 bis 11** verwiesen. Aus diesen ergibt sich, dass in dem gezeigten Beispiel der Knoter **5** mit einem Steuerelement **26** zusammenwirkt, das hier koaxial zu der Knoterwelle **9** angeordnet ist. Das Steuerelement **26** umfasst einen Pin **42,** mittels dessen das Steuerelement **26** mit einer Nut **41** formschlüssig eingreift, die in einem Grundkörper der Knotereinrichtung 1 ausgebildet ist. Das Steuerelement **26** ist um eine Schwenkachse **27** verschwenkbar ausgebildet, wobei in dem gezeigten Beispiel diese Schwenkachse **27** deckungsgleich mit der Längsachse **24** der Knoterwelle **9** ausgebildet ist. Eine Schwenkbewegung des Steuerelements **26** ist infolge des formschlüssigen Eingriffs des Pin **42** mit der Nut **41** auf einen vorgegebenen Winkelbereich beschränkt, der hier ca. 10° beträgt.

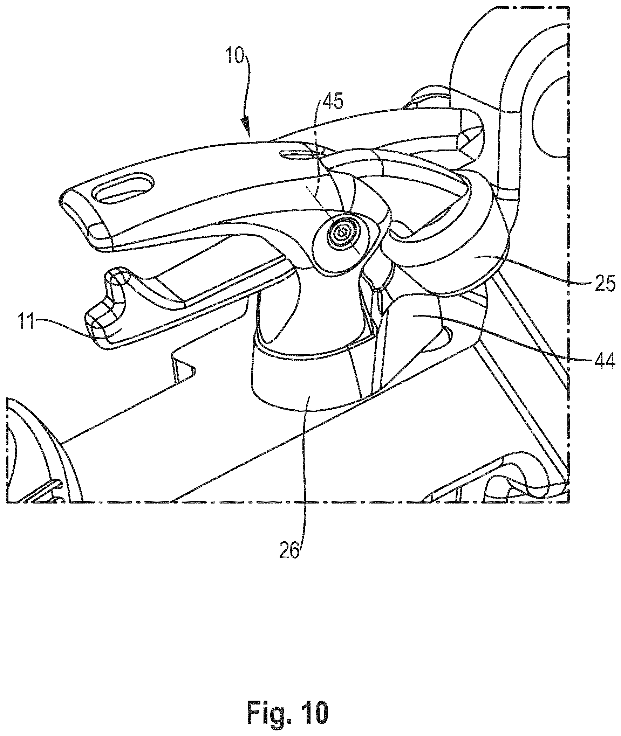

Während des Betriebs des Knoters **5** wird der Knoterhaken **10** um die Längsachse **24** gedreht, wobei das mit der Zunge **11** wirkverbundene Führelement **25,** das hier von einem um eine Drehachse frei verdrehbaren Rad gebildet ist, auf einer Lauffläche des Steuerelements **26** entlanggeführt. Letztere umfasst einen Rampenbereich **44,** der das Führelement **25** in eine radiale Richtung bezogen auf die Längsachse **24** der Knoterwelle **9** nach außen drängt, wodurch aufgrund eines entsprechenden Hebelarms die gewünschte Schwenkbewegung der Zunge **11** um die Schwenkachse **45** angetrieben wird. Dies ergibt sich besonders gut anhand von **Figur 10****.**

Das Führelement **25** wirkt mit einem Andrückelement **43** zusammen, das das Führelement **25** grundsätzlich unter Ausübung einer Andrückkraft in Richtung radial auf die Längsachse **24** der Knoterwelle 9 drückt. Im Zuge der Drehung des Knoterhakens **10** ist das Führelement **25** mithin nicht frei von dem Steuerelement **26** verdrängbar, sondern nur entgegen einer Gegenkraft, die von dem beschriebenen Andrückelement **43** ausgeübt wird. In Kombination mit der Art der Ausformung der Lauffläche des Steuerelements **26** führt dies dazu, dass während der Drehung des Knoterhakens **10** das Steuerelement **26** um seine Schwenkachse **27** so weit verschwenkt wird, bis der Pin **42** an dem Ende der Nut **41** anschlägt. Daraufhin ist das Führelement **25** gezwungen, das Steuerelement **26** zu überwinden, sodass die Zunge **11** schließlich vollständig ausgelenkt ist und in ihrer Offenstellung. Unmittelbar bei Überwindung eines Hochpunkts des Steuerelements **26** wird das Steuerelement **26** infolge der Andrückkraft des Andrückelement **43** schlagartig um die Schwenkachse **27** zurück geschwenkt, bis der Pin **42** an dem gegenüberliegenden Ende der Nut anschlägt. Gleichzeitig wird schlagartig das Führelement **25** in Richtung auf die Längsachse **24** der Knoterwelle **9** zu gedrückt. In Kombination führt dies zu einer ruckartigen Beschleunigung der Zunge **11,** die entsprechend stark "zuschnappt". Die Zunge **11** liegt daraufhin wieder in ihrer Schließstellung vor. Das starke Beschleunigen der Zunge **11** hat den Vorteil, dass die Teilabschnitte des Garns, die unter der Zunge **11** auf dem Knoterhaken **10** aufliegen, sicher gefasst werden können. Insbesondere kann das Garn gefasst werden, bevor es sich versehentlich von dem Knoterhaken **10** löst. Hierdurch ist die Zuverlässigkeit der Knotenbildung verbessert.

### Bezugszeichenliste

| Knotereinrichtung
| Ballenpresse
| Abschnitt
| Abschnitt
| Knoter
| Halteeinrichtung
| Antriebsscheibe
| Drehachse
| Knoterwelle
| Knoterhaken
| Zunge
| Zahnrad
| Halterwelle
| Halteelement
| Schneidelement
| Zahnrad
| Radius
| Radius
| erster Zahnabschnitt
| zweiter Zahnabschnitt
| Konturabschnitt
| erster Konturbereich
| zweiter Konturbereich
| Längsachse
| Führelement
| Steuerelement
| Schwenkachse
Erntegut
Pick-up
Häcksler
Vorkanal
Raffer
Presskanal
Verdichterkolben
Quaderballen
Teilwinkelbereich
Teilwinkelbereich
Plateau
Tal
Längsachse
Nut
Pin
Andrückelement
Rampenbereich
Schwenkachse
Bindenadel
Anfang
Zahn
Gegenplatte

## Patentansprüche

1. Knotereinrichtung (1) für eine landwirtschaftliche Quaderballenpresse (2) zur Verknotung zweier Abschnitte (3, 4) eines Garns zu einem Knoten, umfassend
- einen Knoter (5) zur Bildung des Knotens,
- eine Halteeinrichtung (6) zur Halterung des Garns während eines Knotenbildungsvorgangs sowie
- eine um eine Drehachse (8) drehantreibbare Antriebsscheibe (7) zum zyklischen Antrieb sowohl des Knoters (5) als auch der Halteeinrichtung (6),
wobei der Knoter (5) eine Knoterwelle (9), einen Knoterhaken (10) mit einer schwenkbeweglichen Zunge (11) sowie ein Zahnrad (12) umfasst,
wobei die Halteeinrichtung (6) eine Halterwelle (13), ein Halteelement (14), ein Schneidelement (15) sowie ein Zahnrad (16) umfasst,
wobei die Antriebsscheibe (7) sich jeweils in einem Teilwinkelbereich (36, 37) auf verschiedenen Radien (17, 18) um ihre Drehachse (8) erstreckende Zahnabschnitte (19, 20) aufweist,
wobei ein erster Zahnabschnitt (19) dem Zahnrad (12) des Knoters (5) und ein zweiter Zahnabschnitt (20) dem Zahnrad (16) der Halteeinrichtung (5) in kämmender Weise zugeordnet sind, sodass die Antriebsscheibe (7) dazu eingerichtet ist, mit jeder vollen Umdrehung um ihre Drehachse (8) einen vollen Drehzyklus sowohl des Knoters (5) als auch der Halteeinrichtung (6) zu bewirken,
wobei die Antriebsscheibe (7) einen sich an den ersten Zahnabschnitt (19) in einem Restwinkelbereich anschließenden Konturabschnitt (21) aufweist, der derart mit dem Zahnrad (12) des Knoters (5) zusammenwirkt, dass der Drehzyklus des Knoters (5) vor dem Drehzyklus der Halteeinrichtung (6) einsetzt,
wobei der Konturabschnitt (21) der Antriebsscheibe (7) einen ersten Konturbereich (22) aufweist, der in Drehrichtung der Antriebsscheibe (7) um deren Drehachse (8) betrachtet an einen Anfang des ersten Zahnabschnitts (19) angeschlossen ist, wobei der erste Konturbereich (22) derart geformt ist und mit dem Zahnrad (12) des Knoters (5) zusammenwirkt, dass der Knoter (5) unmittelbar vor Eingriff seines Zahnrads (12) mit dem ersten Zahnabschnitt (19) gezwungen in einem Drehsinn um eine Längsachse (24) der Knoterwelle (9) vordrehbar ist, der dem Drehsinn entspricht, in dem der Knoter (5) im Zuge des sich anschließenden Eingriffs seines Zahnrads (12) mit dem ersten Zahnabschnitt (19) antreibbar ist,
**dadurch gekennzeichnet,**
**dass** der Konturabschnitt (21) der Antriebsscheibe (7) einen sich zwischen dem ersten Konturbereich (22) und dem ersten Zahnabschnitt (19) erstreckenden zweiten Konturbereich (23) aufweist, der derart geformt ist und mit dem Zahnrad (12) des Knoters (5) zusammenwirkt, dass der Knoter (5) zumindest in einem Teil seines jeweiligen Drehzyklus in einem Winkelbereich um eine Längsachse (24) der Knoterwelle (9) frei relativ zu der Antriebsscheibe (7) verdrehbar ist.

2. Knotereinrichtung (1) nach Anspruch 1, **dadurch gekennzeichnet, dass** der zweite Konturbereich (23) derart geformt ist und mit dem Zahnrad (12) des Knoters (5) zusammenwirkt, dass der Knoter (5) bei einem bestimmungsgemäßen Betrieb der Knotereinrichtung (1) unmittelbar nach Ende des Eingriffs seines Zahnrads (12) mit dem ersten Zahnabschnitt (19) in seiner Drehposition relativ zu der Antriebsscheibe (7) arretiert ist.

3. Knotereinrichtung (1) nach Anspruch 1 oder 2, **dadurch gekennzeichnet, dass** der Knoter (5) ein Führelement (25) aufweist, das im Zuge eines Drehzyklus entlang eines Steuerelements (26) führbar ist und hierdurch gezwungen eine Schwenkbewegung der Zunge (11) um deren Schwenkachse bewirkt, wodurch die Zunge (11) von einer Schließstellung in eine Offenstellung und zurück in die Schließstellung überführbar ist.

4. Knotereinrichtung (1) nach Anspruch 3, **dadurch gekennzeichnet, dass** das Steuerelement (26) in einem Winkelbereich schwenkbeweglich gelagert ist, vorzugsweise um eine zu einer Längsachse (24) der Knoterwelle (9) parallele Schwenkachse (27), wobei das Steuerelement (26) in Zusammenwirkung mit dem Führelement (25) in jedem Drehzyklus ausgehend von einer Startposition in eine Endposition und wieder zurück schwenkbar ist.

5. Verfahren zum Betrieb einer Knotereinrichtung (1) nach einem der vorhergehenden Ansprüche, umfassend die folgenden Verfahrensschritte:
a) Mittels einer Bindenadel wird ein erster Abschnitt (4) des Garns zu der Halteeinrichtung (6) geführt, mittels der bereits ein zweiter Abschnitt (3) desselben Garns gehalten ist, wobei die beiden Abschnitte (3, 4) des Garns derart positioniert sind, dass sie mittels des Knoterhakens (10) verarbeitbar sind;
b) Der Knoter (5) wird mittels der Antriebsscheibe (7) drehangetrieben, wobei der Knoterhaken (10) des Knoters (5) während eines Drehzyklus eine Drehung um eine Längsachse (24) der Knoterwelle (9) um mindestens 360° ausführt;
c) Im Zuge des Drehzyklus wird die Zunge (11) des Knoterhakens (10) von einer Schließstellung in eine Offenstellung und zurück in die Schließstellung überführt, wodurch die beiden Abschnitte (3, 4) des Garns derart übereinander geführt werden, dass erste Teilabschnitte des Garns auf der Zunge (11) und zweite Teilabschnitte des Garns unter der Zunge (11) liegen;
d) Die Halteeinrichtung (6) wird mittels der Antriebsscheibe (7) drehangetrieben, wobei der mittels der Bindenadel angereichte Abschnitt (4) des Garns mittels der Halteeinrichtung (6) gehalten ist und mittels des Schneidelements (15) durchgeschnitten wird, sodass ein neues Ende des Garns gebildet wird, das mittels der Halteeinrichtung (6) gehalten ist;
e) Im Zuge eines Drehzyklus beginnt eine Drehung des Knoters (5) zeitlich vor einer Drehung der Halteeinrichtung (6).

6. Verfahren nach Anspruch 5, **dadurch gekennzeichnet, dass** der Knoter (5) vor Beginn der Drehung der Halteeinrichtung (6) um mindestens 20°, vorzugsweise mindestens 30°, weiter vorzugsweise mindestens 40°, um die Längsachse (24) der Knoterwelle (9) gedreht wird.

7. Verfahren nach einem der vorhergehenden Ansprüche, **dadurch gekennzeichnet, dass** der Knoter (5) während eines Drehzyklus zunächst um einen Betrag von mehr als 360° in einem ersten Drehsinn gedreht wird und sodann um die Differenz zwischen dem Betrag und 360° in einem entgegengesetzten zweiten Drehsinn wieder zurück gedreht wird, sodass der Knoter (5) am Ende eines Drehzyklus effektiv um 360° um die Längsachse (24) der Knoterwelle (9) gedreht ist.

8. Verfahren nach Anspruch 7, **dadurch gekennzeichnet, dass** die beiden Abschnitte (3, 4) des Garns unter Bildung eines Knotens aus dem Knoter (5) herausgezogen werden, wobei die Drehung des Knoters (5) in dem zweiten Drehsinn mittels einer im Zuge der Bildung des Knotens auf den Knoter (5) ausgeübten Zugkraft angetrieben wird.

9. Verfahren nach einem der vorhergehenden Ansprüche, **dadurch gekennzeichnet, dass** ein Steuerelement (26) zur Steuerung einer Schwenkbewegung der Zunge (11) während eines Drehzyklus in einem Winkelbereich zwischen einer Startposition und einer Endposition vor und zurück verschwenkt wird, vorzugsweise um eine zu der Längsachse (24) der Knoterwelle (9) parallele Schwenkachse (27).

10. Verfahren nach einem der vorhergehenden Ansprüche, **dadurch gekennzeichnet, dass** der Drehzyklus des Knoters (5) beginnt, bevor die Abschnitte (3, 4) des Garns auf einer der Halteeinrichtung (4) abgewandten Ballenseite des Knoters (5) mittels einer Greifeinrichtung gegriffen sind.

## Claims

1. Knotter device (1) for an agricultural square baler (2) for knotting two sections (3, 4) of a twine to form a knot, comprising
- a knotter (5) for forming the knot,
- a holding device (6) for holding the twine during a knot-forming operation, and
- a drive pulley (7), which is rotationally drivable about an axis of rotation (8), for cyclically driving both the knotter (5) and the holding device (6),
wherein the knotter (5) comprises a knotter shaft (9), a knotter hook (10) with a pivotable tongue (11), and a gearwheel (12),
wherein the holding device (6) comprises a holding shaft (13), a holding element (14), a cutting element (15) and a gearwheel (16),
wherein the drive pulley (7) has tooth sections (19, 20) which each extend in a partial angular range (36, 37) on different radii (17, 18) about the axis of rotation (8) of said drive pulley,
wherein a first tooth section (19) is meshingly assigned to the gearwheel (12) of the knotter (5) and a second tooth section (20) is meshingly assigned to the gearwheel (16) of the holding device (5), such that the drive pulley (7), with each full revolution about its axis of rotation (8), is configured to bring about a full rotation cycle both of the knotter (5) and the holding device (6),
wherein the drive pulley (7) has a contour section (21) which adjoins the first tooth section (19) in a remaining angular range and interacts with the gearwheel (12) of the knotter (5) in such a way that the rotation cycle of the knotter (5) begins before the rotation cycle of the holding device (6),
wherein the contour section (21) of the drive pulley (7) has a first contour region (22) which, as viewed in the direction of rotation of the drive pulley (7) about its axis of rotation (8), is connected to a start of the first tooth section (19), wherein the first contour region (22) is formed and interacts with the gearwheel (12) of the knotter (5) in such a way that the knotter (5), immediately before engagement of its gearwheel (12) with the first tooth section (19), is forcibly pre-rotatable in a direction of rotation about a longitudinal axis (24) of the knotter shaft (9) corresponding to the direction of rotation, in which the knotter (5) is drivable during the subsequent engagement of its gearwheel (12) with the first tooth section (19),
**characterized in that** the contour section (21) of the drive pulley (7) has a second contour region (23) which extends between the first contour region (22) and the first tooth section (19) and is formed and interacts with the gearwheel (12) of the knotter (5) in such a way that the knotter (5), at least in part of its respective rotation cycle, is rotatable freely relative to the drive pulley (7) in an angular range about a longitudinal axis (24) of the knotter shaft (9).

2. Knotter device (1) according to Claim 1, **characterized in that** the second contour region (23) is formed and interacts with the gearwheel (12) of the knotter (5) in such a way that, when the knotter device (1) is operated as intended, the knotter (5) is locked in its rotational position relative to the drive pulley (7) immediately after the end of the engagement of its gearwheel (12) with the first tooth section (19).

3. Knotter device (1) according to Claim 1 or 2, **characterized in that** the knotter (5) has a guide element (25) which can be guided along a control element (26) during a rotation cycle and, by this means, is forced to bring about a pivoting movement of the tongue (11) about its pivot axis, as a result of which the tongue (11) is transferable from a closed position into an open position and back into the closed position.

4. Knotter device (1) according to Claim 3, **characterized in that** that the control element (26) is mounted pivotably in an angular range, preferably about a pivot axis (27) parallel to a longitudinal axis (24) of the knotter shaft (9), wherein the control element (26) in interaction with the guide element (25) is pivotable in each rotation cycle from a starting position into an end position and back again.

5. Method for operating a knotter device (1) according to any one of the preceding claims, comprising the following method steps:
a) by means of a binding needle, a first section (4) of the twine is guided to the holding device (6), by means of which a second section (3) of the same twine is already held, the two sections (3, 4) of the twine being positioned in such a way that they can be processed by means of the knotter hook (10);
b) the knotter (5) is rotationally driven by means of the drive pulley (7), wherein the knotter hook (10) of the knotter (5) performs a rotation about a longitudinal axis (24) of the knotter shaft (9) by at least 360° during a rotation cycle;
c) during the rotation cycle, the tongue (11) of the knotter hook (10) is transferred from a closed position into an open position and back into the closed position, as a result of which the two sections (3, 4) of the twine are guided on each other in such a way that first subsections of the twine are located on the tongue (11) and second subsections of the twine are located under the tongue (11);
d) the holding device (6) is rotationally driven by means of the drive pulley (7), wherein the section (4) of the twine, which is handed over by means of the binding needle, is held by means of the holding device (6) and cut through by means of the cutting element (15), so that a new end of the twine is formed, which is held by means of the holding device (6);
e) during a rotation cycle, rotation of the knotter (5) begins temporally before rotation of the holding device (6).

6. Method according to Claim 5, **characterized in that** the knotter (5)is rotated about the longitudinal axis (24) of the knotter shaft (9) by at least 20°, preferably at least 30°, more preferably at least 40°, before the beginning of the rotation of the holding device (6).

7. Method according to any one of the preceding claims, **characterized in that**, during a rotation cycle, the knotter (5) is first rotated by an amount of more than 360° in a first direction of rotation and then rotated back again by the difference between the amount and 360° in an opposite, second direction of rotation such that, at the end of a rotation cycle, the knotter (5) is effectively rotated by 360° about the longitudinal axis (24) of the knotter shaft (9).

8. Method according to Claim 7, **characterized in that** the two sections (3, 4) of the twine are pulled out of the knotter (5), forming a knot, wherein the rotation of the knotter (5) in the second direction of rotation is driven by means of a tractive force exerted on the knotter (5) during the formation of the knot.

9. Method according to any one of the preceding claims, **characterized in that** a control element (26) for controlling a pivoting movement of the tongue (11) during a rotation cycle is pivoted forwards and backwards in an angular range between a starting position and an end position, preferably about a pivot axis (27) parallel to the longitudinal axis (24) of the knotter shaft (9).

10. Method according to any one of the preceding claims, **characterized in that** the rotation cycle of the knotter (5) begins before the sections (3, 4) of the twine are gripped by means of a gripping device on a bale side of the knotter (5) facing away from the holding device (4).

## Revendications

1. Dispositif noueur (1) destiné à une presse à balles carrées (2) agricole, pour le nouage de deux portions (3, 4) d'un fil en vue de former un nœud, comprenant
- un noueur (5) destiné à former le nœud,
- un dispositif de maintien (6) destiné à maintenir le fil pendant une opération de formation de nœud, ainsi que
- un disque d'entraînement (7) pouvant être entraîné en rotation autour d'un axe de rotation (8) et destiné à l'entraînement cyclique aussi bien du noueur (5) que du dispositif de maintien (6),
le noueur (5) comportant un arbre de noueur (9), un bec noueur (10) doté d'une languette (11) pivotante, ainsi qu'une roue dentée (12),
le dispositif de maintien (6) comportant un arbre de support (13), un élément de maintien (14), un élément de coupe (15) et une roue dentée (16),
le disque d'entraînement (7) présentant des portions dentées (19, 20) qui s'étendent chacune dans une plage angulaire partielle (36, 37) sur des rayons (17, 18) différents autour de son axe de rotation (8),
sachant qu'une première portion dentée (19) est associée à la roue dentée (12) du noueur (5), et une deuxième portion dentée (20) est associée à la roue dentée (16) du dispositif de maintien (5), de manière à engrener, de sorte que le disque d'entraînement (7) est agencé pour générer, avec chaque révolution complète autour de son axe de rotation (8), un cycle de rotation complet aussi bien du noueur (5) que du dispositif de maintien (6),
le disque d'entraînement (7) présentant une portion profilée (21) qui se raccorde à la première portion dentée (19), dans une plage angulaire restante, et coopère avec la roue dentée (12) du noueur (5) de manière à ce que le cycle de rotation du noueur (5) commence avant le cycle de rotation du dispositif de maintien (6),
la portion profilée (21) du disque d'entraînement (7) présentant une première zone profilée (22) qui, vu dans le sens de rotation du disque d'entraînement (7) autour de son axe de rotation (8), se raccorde à un début de la première portion dentée (19), la première zone profilée (22) étant formée et coopérant avec la roue dentée (12) du noueur (5) de manière à ce que, directement avant l'engrènement de sa roue dentée (12) avec la première portion dentée (19), le noueur (5) puisse être préalablement tourné de manière forcée dans un sens de rotation autour d'un axe longitudinal (24) de l'arbre de noueur (9) qui correspond au sens de rotation dans lequel le noueur (5) peut être entraîné dans le cadre de l'engrènement subséquent de sa roue dentée (12) avec la première portion dentée (19),
**caractérisé en ce que**
la portion profilée (21) du disque d'entraînement (7) présente une deuxième zone profilée (23) qui s'étend entre la première zone profilé (22) et la première portion dentée (19) et est formée et coopère avec la roue dentée (12) du noueur (5) de manière à ce que le noueur (5) puisse être tourné librement par rapport au disque d'entraînement (7) dans une plage angulaire autour d'un axe longitudinal (24) de l'arbre de noueur (9), au moins dans une partie de son cycle de rotation respectif.

2. Dispositif noueur (1) selon la revendication 1, **caractérisé en ce que** la deuxième zone profilée (23) est formée et coopère avec la roue dentée (12) du noueur (5) de manière à ce que, lors d'un fonctionnement conforme à l'utilisation prévue du dispositif noueur (1), le noueur (5) puisse être verrouillé dans sa position angulaire par rapport au disque d'entraînement (7), directement à la fin de l'engrènement de sa roue dentée (12) avec la première portion dentée (19).

3. Dispositif noueur (1) selon la revendication 1 ou 2, **caractérisé en ce que** le noueur (5) présente un élément de guidage (25) qui peut être guidé le long d'un élément de commande (26), dans le cadre d'un cycle de rotation, et provoque de ce fait un mouvement pivotant forcé de la languette (11) autour de son axe de pivotement, ce qui a pour effet que la languette (11) peut être amenée d'une position fermée dans une position ouverte et de nouveau dans la position fermée.

4. Dispositif noueur (1) selon la revendication 3, **caractérisé en ce que** l'élément de commande (26) est monté avec possibilité de pivotement dans une plage angulaire, de préférence autour d'un axe de pivotement (27) qui est parallèle à un axe longitudinal (24) de l'arbre de noueur (9), l'élément de commande (26), en coopération avec l'élément de guidage (25), pouvant être pivoté dans chaque cycle de rotation d'une position de départ à une position finale et inversement.

5. Procédé pour faire fonctionner un dispositif noueur (1) selon une des revendications précédentes, comprenant les étapes de procédé suivantes :
a) une aiguille de liage est utilisée pour guider une première portion (4) du fil vers le dispositif de maintien (6) qui maintient déjà une deuxième portion (3) du même fil, les deux portions (3, 4) du fil étant positionnées de manière à ce qu'elles puissent être mises en œuvre au moyen du bec noueur (10) ;
b) le noueur (5) est entraîné en rotation au moyen du disque d'entraînement (7), le bec noueur (10) du noueur (5) effectuant, pendant un cycle de rotation, une rotation d'au moins 360° autour d'un axe longitudinal (24) de l'arbre de noueur (9) ;
c) dans le cadre du cycle de rotation, la languette (11) du bec noueur (10) est amenée d'une position fermée dans une position ouverte et de nouveau dans la position fermée, ce qui a pour effet que les deux portions (3, 4) du fil sont guidées l'une au-dessus de l'autre de manière à ce que des premiers tronçons du fil reposent sur la languette (11) et des deuxièmes tronçons du fil se situent sous la languette (11) ;
d) le dispositif de maintien (6) est entraîné en rotation au moyen du disque d'entraînement (7), la portion (4) du fil qui est amenée au moyen de l'aiguille de liage étant maintenue à l'aide du dispositif de maintien (6) et étant coupée à l'aide de l'élément de coupe (15), de manière à former une nouvelle extrémité du fil qui est maintenue par le dispositif de maintien (6) ;
e) dans le cadre d'un cycle de rotation, une rotation du noueur (5) commence dans le temps avant une rotation du dispositif de maintien (6).

6. Procédé selon la revendication 5, **caractérisé en ce que**, avant le début de la rotation du dispositif de maintien (6), le noueur (5) est tourné d'au moins 20°, de préférence d'au moins 30°, et de manière particulièrement avantageuse d'au moins 40° autour de l'axe longitudinal (24) de l'arbre de noueur (9).

7. Procédé selon une des revendications précédentes, **caractérisé en ce que**, pendant un cycle de rotation, le noueur (5) est dans un premier temps tourné d'une valeur de plus de 360° dans un premier sens de rotation, et est ensuite tourné en arrière de la différence entre cette valeur et 360°, dans un deuxième sens de rotation opposé, de sorte qu'à la fin d'un cycle de rotation, le noueur (5) est effectivement tourné de 360° autour de l'axe longitudinal (24) de l'arbre de noueur (9).

8. Procédé selon la revendication 7, **caractérisé en ce que** les deux portions (3, 4) du fil sont retirées du noueur (5) en formant un nœud, la rotation du noueur (5) dans le deuxième sens de rotation étant entraînée au moyen d'une force de traction qui est exercée sur le noueur (5) dans le cadre de la formation du nœud.

9. Procédé selon une des revendications précédentes, **caractérisé en ce que**, pendant un cycle de rotation, un élément de commande (26) est pivoté en avant et en arrière dans une plage angulaire entre une position de départ et une position finale, de préférence autour d'un axe de pivotement (27) parallèle à l'axe longitudinal (24) de l'arbre de noueur (9), aux fins de commander un mouvement pivotant de la languette (11),

10. Procédé selon une des revendications précédentes, **caractérisé en ce que** le cycle de rotation du noueur (5) commence avant que les portions (3, 4) du fil ne soient saisies au moyen d'un dispositif préhenseur, sur un côté balle du noueur (5) opposé au dispositif de maintien (4).
